# EUROPEAN PATENT APPLICATION

(11) **EP 3 336 925 A1**
(43) Date of publication of application: **20.06.2018**
(21) Application number: 16203955.6
(22) Date of filing: 14.12.2016
(51) Int. Cl.: H01M 2/10, H01M 2/20, H01M 2/34, H01M 10/42

(54) **CELL CONNECTING ELEMENT**

(71) Applicant: Lithium Energy and Power GmbH & Co. KG, 70469 Stuttgart (DE)
(72) Inventor: Deromelaere, Gaetan, 70806 Kornwestheim (DE); Wille, Christopher, 70563 Stuttgart (DE); Klinsmann, Markus, 70195 Stuttgart (DE)
(74) Representative: Bee, Joachim

(57) **Abstract**

The invention regards a cell connecting element (1) comprising a first contact element (2), a reactive layer (3) provided on the first contact element (2), and an insulating layer (4) provided on the reactive layer (3), wherein at least two second contact elements (5), which are electrically isolated from each other, are provided on the insulating layer (4), and wherein the reactive layer (3) is adapted to destroy the insulating layer (4) or to create an electrical conducting path through or around the insulating layer (4) after being activated in order to electrically connect the first contact element (2) and the second contact elements (5).

## Description

### Prior art

The invention regards a cell connecting element for connecting battery cells. Further, the invention regards a battery comprising such a cell connecting element.

From the prior art it is known that batteries, particularly Li-ion batteries, comprise volatile and combustible electrolytes. In case of internal shorts or mechanical damage, for example caused by nail penetration, a battery cell might overheat. This could lead to so-called thermal runaway, i.e. an exothermic reaction which cannot be stopped.

In order to avoid thermal runaway, a discharging device is provided. The discharging device is adapted to shortcut a single battery cell in case the battery cell is damaged. Therefore, the battery cell is discharged in a quick way. To ensure such a quick discharge, high currents have to flow through the discharging device. Therefore, the discharging device has to be placed close to the battery cell in order to shorten the path the current has to flow.

In case of batteries including a lot of battery elements, wherein the battery elements include a lot of battery cell, which particularly is the case in electric vehicles, the discharging devices require a lot of volume such that the overall volume of the battery is increased.

### Disclosure of the invention

The cell connecting element according to the invention allows shortcutting several battery cells so as to function as one single discharging device.

Therefore, one discharging device can discharge several battery cells. This leads to a reduced amount of discharging devices and thus to a reduced battery volume.

The cell connecting element according to the invention comprises a first contact element, a reactive layer provided on the first contact element, and an insulating layer provided on the reactive layer. Further, at least two second contact elements are provided on the insulating layer. The two second contact elements are electrically isolated from each other. The reactive layer preferably is electroconductive. Further, the reactive layer is adapted to destroy the insulating layer or to create an electrical conducting path through or around the insulating layer after being activated in order to electrically connect the first contact element. The cell connecting element allows connecting at least three elements, each one to the first contact element and the two second contact elements, respectively. All these three elements are electrically isolated from each other in normal operation. Only in case the reactive layer is activated and destroys the insulating layer or creates the electrical conducting path through or around the insulating layer, the elements are electrically connected. Hence, the cell connecting element can be used to selectively shortcut at least two battery cells to discharge the battery cells in case of damage.

The dependent claims contain advantageous embodiments of the present invention.

Preferably, the cell connecting element comprises at least two first contact elements. All first contact elements are electrically isolated from each other. Further, an additional insulating layer is preferably provided between the first contact elements and the reactive layer. Therefore, the number of elements connectable to the cell connecting element is further increased. Due to the additional insulating layer, all elements connected to the cell connecting element are electrically isolated from each other in normal operations. Only after activating the reactive layer, an electrical connection is established between all elements connected to the cell connecting element.

In a particular embodiment, a solder material is provided between each first contact element and the reactive layer or additional insulating layer. Additionally or alternatively, solder material is provided between each second contact element and the isolating layer. The solder material is preferably melted in response to the reactive layer being activated. Since the reactive layer preferably generates heat to destroy the insulating layer and the additional insulating layer, the heat is also employed to melt the solder material. Therefore, a soldering process is performed which connects the first contact element and the second contact element. In a preferred embodiment, the insulating layer comprises a perforated element. The molten solder material is adapted to flow through the holes within the perforated element, such that the insulating layer is no longer able to electrically isolate the first contact element and the second contact element. In any case, after activating the reactive layer, the cell connecting element changes from being an insulator to being a conductor.

The cell connecting element particularly comprises an electroconductive trigger pin electrically connected to the reactive layer. The electroconductive trigger pin is selectively electrically connectable to one of the second contact elements to create a current path from the first contact element via the reactive layer and the trigger pin to the second contact element. In this way, the reactive layer is ignited via a current pulse. After activation, the reactive layer continues to generate heat which destroys the insulating layer or creates the electrical conducting path through or around the insulating layer.

Preferably, the first contact element and the second contact elements have a plate-like shape with parallel top surface and bottom surface. The reactive layer and the insulating layer are provided between the top surface of the first contact element and the bottom surface of the second contact element. In this way, the cell connecting element is simple to manufacture and comprises large areas for connecting the first contact element and the second contact elements such that a current path between the first contact element and the second contact elements has a low electrical resistance.

In another preferred embodiment, the first contact element has a convex polygonal cross section with several outer surfaces. At least one outer surface is provided with the reactive layer and the insulating layer such that each outer surface is electrically connectable to at least two second contact elements. Such a design allows a start-like arrangement such that the elements connected to the cell connecting element do not interfere with each other.

It is also preferred that the first contact element has a round cross section with a circumferential surface. Said circumferential surface is provided with the reactive layer and the insulating layer. Therefore, the circumferential surface is electrically connectable to at least two second contact elements. Due to the round cross section, the second contact elements can be connected with the circumferential surface of the first contact element from any direction.

The second contact elements preferably comprise a cutout corresponding to the round cross section of the first contact element. Therefore, the contact area between the first contact element and the second contact elements, preferably the contact area between the circumferential surface and the cutout, is therefore increased.

The first contact element and the second contact elements preferably are busbars. Busbars are commonly known in the field of batteries for their ability to carry high currents. Therefore, the busbars can establish a shortcut of battery cells such that high currents for discharging the battery cell due to the shortcut flow. This allows fast discharge of the battery cell, which is performed in case the battery cell is damaged.

The invention further regards a battery. The battery comprises at least two battery cells and at least one cell connecting element as described above. The number of battery cells is higher than the number of cell connecting elements. The cell connecting element functions as a fast discharging device and selectively establishes an external shortcut of the battery cells in order to discharge them. This prevents catastrophic cell behavior in case of damage. Each battery cell is therefore electrically connected to the via at least one cell connecting element. Therefore, one discharging device can be connected to several battery cells and can therefore discharge several battery cells. Contrary to the prior art, it does not have to be provided one discharging device per battery cell. The cell connecting element as described above rather allows shortcutting more than one battery cell at the same time. Due to the reduced number of discharging devices, the complexity and the volume of the battery are reduced compared with the prior art.

### Description of the drawings

Specific embodiments will be described together with the attached drawings. In the drawings
- Figure 1: is a schematic view of a battery according to an embodiment of the invention,
- Figure 2: is a schematic view of a cell connecting element according to a first embodiment of the invention,
- Figure 3: is a schematic view of a cell connecting element according to a second embodiment of the invention,
- Figure 4: is a first schematic view of a cell connecting element according to a third embodiment of the invention,
- Figure 5: is a second schematic view of the cell connecting element according to the third embodiment of the invention,
- Figure 6: is a schematic view of a cell connecting element according to a fourth embodiment of the invention,
- Figure 7: is a schematic view of a cell connecting element according to a fifth embodiment of the invention, and
- Figure 8: is a schematic view of a cell connecting element according to a sixth embodiment of the invention.

### Embodiments of the invention

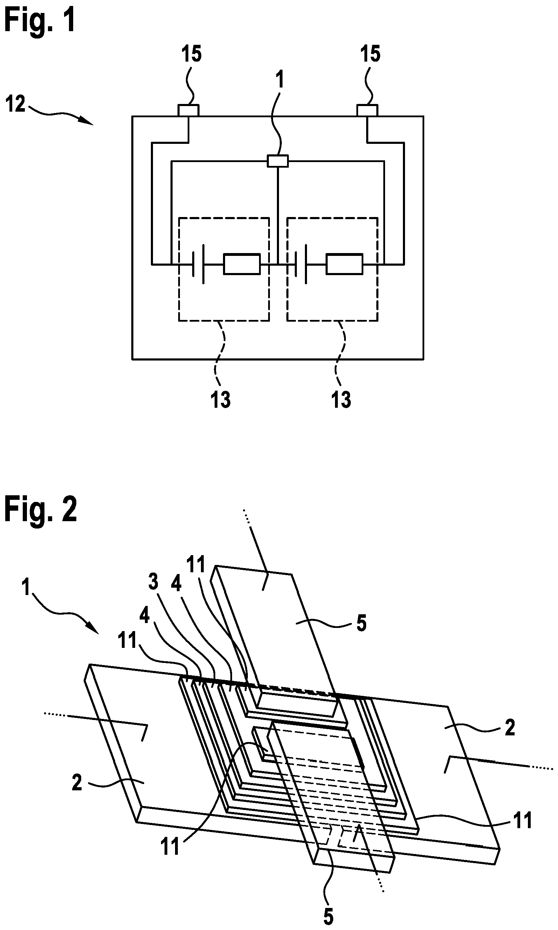

Figure 1 is a schematic view of a battery 12 according to an embodiment of the invention. The battery 12 comprises two battery cells 13 connected in serial which supply electrical power to battery terminals 15 such that external devices can be connected to the battery terminals 15 in order to receive electrical power.

In case of damage of a battery cell 13, an internal shortcut occurs inside the damaged battery cell 13. This leads to generation of heat which might cause overheating of the battery cell 13 and the whole battery 12. In order to avoid such a behavior, the battery 12 comprises a cell connecting element 1 functioning as a discharging device for discharging the battery cells 13 by selectively establishing an external shortcut. The external shortcut preferably has a low electrical resistance such that most of the shortcut current flows through the external shortcut and only a minor current flows through the internal shortcut.

Further, it is preferred to employ less cell connecting elements 1 than battery cells 13 such that each cell connecting element 1 discharges more than one battery cells 13. However, from the prior art, it is known that discharging devices, which discharge more than one battery cell 13, cause circumstances which are hazardous for the battery cells 13 such that the battery cells 13 might catch fire or explode even though the external shortcut is established. Such circumferences include reverse polarity, interruption of current path and discharging via the damaged zone.

Reverse polarity is an effect occurring in case of interruption of the current path. This is caused by a battery cells losing their electrochemical functionality, particularly by separator shutdown or current collector melting. Due to the interruption of the current path, the potential of the electrodes can be shifted such that at some of the battery cells 13 a reversed potential is obtained. In case of a potential of a Cu electrode being shifted above that of a Al electrode, Cu²⁺ dissolution can take place, leading to growth of Cu dendrites. The Cu dendrites might shortcut the respective battery cell 13, large currents might flow which overheat the battery cell 13 and the battery 12.

In case several battery cells 13, including a damaged battery cell 13, are connected in series to the discharging device, discharging via the damaged zone occurs in case the damaged battery cell 13 goes into shutdown, the battery cell 13 loses the electrochemical functionality as described above. Therefore, the battery cells 13 cannot conduct any current anymore. However, the damaged battery cell 13 still comprises the internal shortcut. In case remaining other battery cells 13 discharged by the discharging device 3 still supply electrical power, those remaining battery cells 13 are discharged via the internal shortcut of the damaged battery cell 13. This causes the same effects that were indented to be avoided with employment of the discharging device 14, particularly overheating of the battery cell 13.

In case not the damaged battery cell 13 but any other battery cell 13 goes into shutdown as explained above, the current path of the external shortcut established by the discharging device 14 is interrupted. In case the damaged battery cell 13 still supplies electrical power, the conditions for the damaged battery cell 13 are the same as if the discharging device 14 were not present. Hence, there is the risk of overheating the battery cell 13.

All these circumstances are avoided due to providing the cell connecting element 1. The cell connecting element 1 establishes single shortcut current paths for each battery cell 13. Therefore, the same conditions are provides as in case one discharging device would be provided for one battery cell 13. Particularly, it is not possible to interrupt the current path for all battery cells 13. The cell connecting element 1 can be any one of the connecting elements 1 shown in figures 2 to 8 and explained below.

Figure 2 is a schematic view of a cell connecting element 1 according to a first embodiment of the invention. The cell connecting element 1 comprises four connection points in order to shortcut three battery cells 13 . However, in normal operations, the cell connecting element 1 isolates all connected elements from each other.

The cell connecting element 1 comprises two first contact elements 2 and two second contact elements 5. The first contact elements 2 and the second contact elements 5 are connectable to the battery cells 13. Preferably, the first contact elements 2 and the second contact elements 5 are busbars and made from copper or aluminum, or other metals.

On each first contact element 2 and on each second contact element 5 a solder material 11 is provided. On the solder material 11, an insulating layer 4 is provided. One insulating layer 4 preferably covers the solder material 11 on the first contact element 2 while another insulating layer 4 preferably covers the solder material 11 on the second contact elements 5. Therefore, there are two insulating layers 4 provided within the cell connecting element 1.

Between the insulating layers 4, a reactive layer 3 is provided. The reactive layer 3 preferable is electroconductive. The reactive layer 3 further can be activated in order to generate heat. Due to heat generation, the insulating layers 4 could be destroyed or an electrical conducting path could be generated through or around the insulating layers 4. This leads to electrical connection of the first contact elements 2 and the second contact elements 5.

The generated heat melts the solder material 11 provided on any first contact element 2 and second contact element 5. Therefore, the solder material 11 provided on any first contact element 2 and the second contact element 5 electrically connect with each other. In this way, a connection having a low electrical resistance is generated between the first contact elements 2 and the second contact elements 5 due to a soldering process. To allow such a connection, the insulating layers 4 are either destroyed or comprise holes through which the molten solder material 11 can flow.

As can be seen, in normal operations any first contact element 2 and any second contact element 5 is electrically isolated from any other first contact element 2 and second contact element 5. After activating the reactive layer 3, all first contact elements 2 and second contact elements 5 are electrically connected. Preferably, a further isolating element apart from an air gap can be provided between the first contact elements 2 or between the second contact elements 5.

The reactive layer 3 is particularly activated via trigger pins (not shown). The heat generated by the reactive layer 3 preferably is generated due to an exothermic reaction of the reactive layer 3, while said reaction is started due to applying a voltage to the trigger pins.

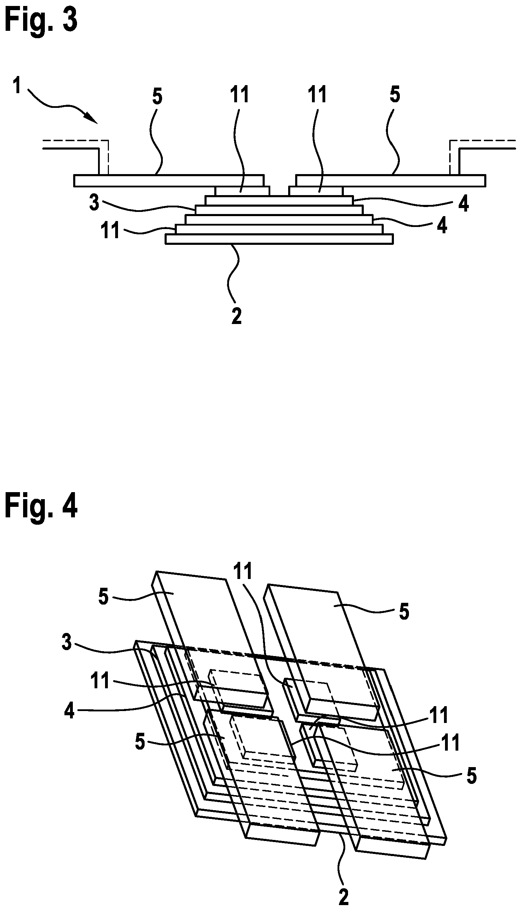

Figure 3 is a schematic view of a cell connecting element 1 according to a second embodiment of the invention. The cell connecting element 1 according to the second embodiment is basically identical to the cell connecting element 1 according to first embodiment. A difference can be seen in that the cell connecting element 1 according to the second embodiment only comprises one first contact element 2, such that only three connection points are provided.

In the second embodiment, two insulating layers 4 are shown as in the first embodiment. In an alternative design of the second embodiment, only one insulating layer 4 is provided, which is placed between the solder materials 11 on the second contact elements 5 and the reactive layer 3. The reactive layer 3 is therefore directly placed on the solder material 11 on the first contact element 2.

However, the first contact element 2 and the second contact elements 5 are still electrically isolated.

In case only one insulating layer 4 is provided, the cell connecting element 1 may comprise only one trigger pin connected to the reactive layer 3 since the reactive layer 3 is electrically connected to the first contact element 2. Therefore, a voltage between the one trigger pin and the first contact element 2 leads to activation of the reactive layer 3. Therefore, the design of the reactive layer can be simplified.

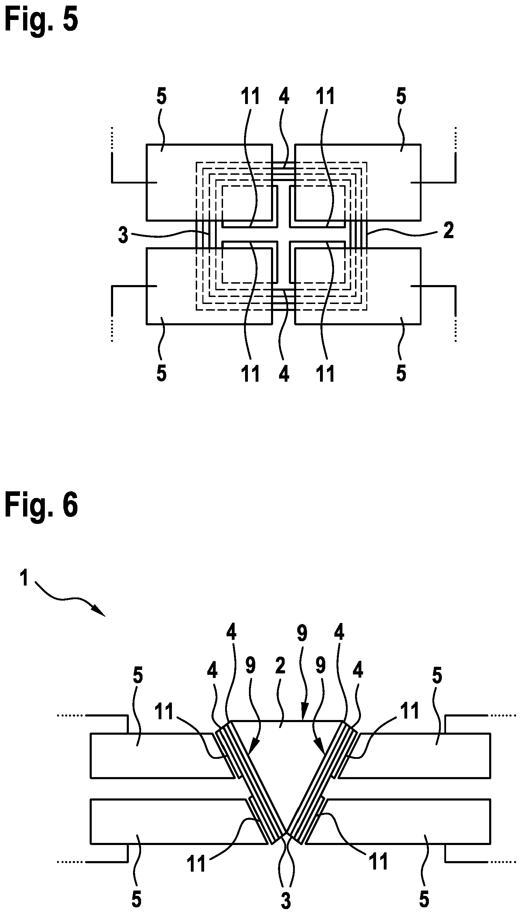

Figures 4 and 5 are schematic views of a cell connecting element 1 according to a third embodiment of the invention. The third embodiment is basically identical to the second embodiment with the only difference that four second contact elements 5 are provided instead of two second contact elements 5. Therefore, the cell connecting element 1 provides five connection points.

In the third embodiment, an insulating layer 4 is provided between the reactive layer 3 and the solder material 11 on the four second contact elements 5. Another insulating layer 4 is provided between the first contact element 2 and the reactive layer 3. This insulating layer 4 could also be omitted as described above with reference to the second embodiment.

Figure 6 is a schematic view of a cell connecting element 1 according to a fourth embodiment of the invention. According to the fourth embodiment, the first contact element 2 has a convex polygonal cross section with several outer surfaces 9. On two of these outer surfaces 9, second contact elements 5 are provided. Particularly, there is provided the same setup as in the preceding embodiments. This means that on the respective outer surfaces 9 of the first contact element 2, solder material 11 is provided. In the same way, solder material 11 is provided on the parts of the second contact elements 5. On top of the solder materials 11, an insulating layer 4 is placed. Therefore, one insulating layer 4 is provided on each outer surface 9 of the first contact element 2. On each such insulating layer 4, a reactive layer 3 is placed. Between the reactive lacer 3 and the solder material 11 on the second contact elements 5, which are to be connected to the particular outer surface 9 of the first contact element 2, another insulating layer 4 is provided. Again, the insulating layers 4 placed on the solder material 11 on the first contact element 2 can be omitted.

Each reactive layer 3 is again activated by one or two trigger pins (not shown) as described above. Due to the heat generated by the reactive layers 3, the respective insulating layers 4 are destroyed or an electrical conducting path is created through or around the insulating layers 4 and an electrical connection between the first contact element 2 and the second contact elements 5 is established.

The cone shape of the first contact element 2 shown in figure 6 is preferable since a spring may press the first contact element 2 from the outer surface 9 that is not connected to second contact elements 5. In this way, the electrical contact between the first contact element 2 and the second contact elements 5 after destroying the insulating layers 4 or after creating the electrical conducting path through or around the insulating layers 4 is improved.

Particularly, the second contact elements 5 provided on one of the outer surfaces 9 can be connected to first contact element 2 independent from the other second contact elements 5 provided on other outer surfaces 9 of the first contact element 2. Although figure 6 shows two second contact elements 5 each on two outer surfaces 9 of the first contact element 2, more or less second contact elements 5 might be connected to more or less outer surfaces 9.

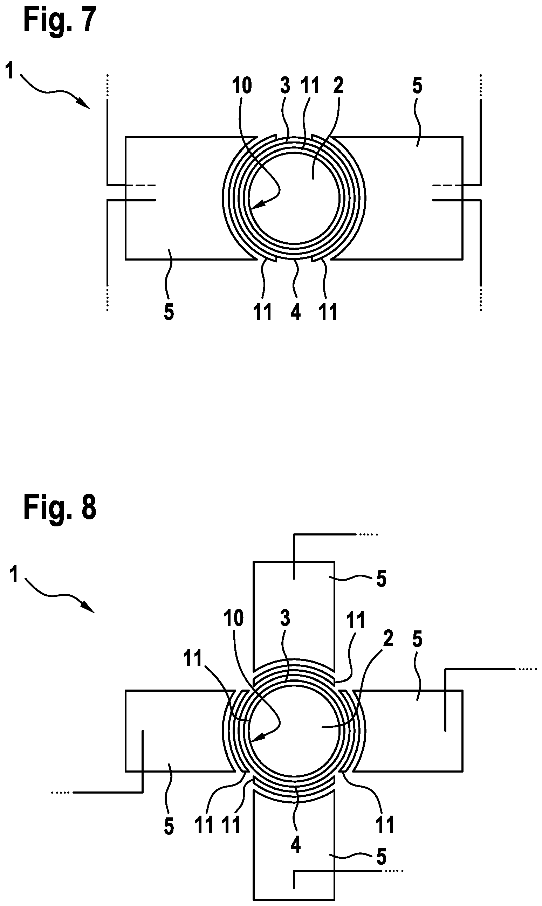

Figure 7 is a schematic view of ta cell connecting element 1 according to a fifth embodiment of the invention. In the fifth embodiment, the first contact element 2 has a round cross section wit a circumferential surface 10. The circumferential surface 10 is connectable to two second contact elements 5, which are shaped complementary to the circumferential surface 10. Hence, the cell connecting element 1 according to the fifth embodiment comprises three connection points.

On the circumferential surface 10 as well as on the second contact elements 5, solder materials 11 are provided. Further, on the circumferential surface 10, a reactive layer 3 is provided. Between the reactive layer 3 and the solder materials 11 of the second contact elements 5, an insulating layer 4 is placed. The cell connecting element 1 comprises a trigger pin (not shown) connected to the reactive layer 3and can be activated via a voltage between the first contact element 2 and the trigger pin. Activating the reactive layer leads to destroying the insulating layer 4 or to creating the electrical conducting path through or around the insulating layers 4 as described above such that an electrical connection between the first contact element 2 and the second contact elements 5 is established.

Figure 8 is a schematic view of a cell connecting element 1 according to a sixth embodiment of the invention. The sixth embodiment is basically identical to the fifth embodiment wherein four instead of two second contact elements 5 are connectable to the first contact element 2. Therefore, the cell connecting element 1 comprises five connection points.

## Claims

1. Cell connecting element (1) comprising
• a first contact element (2),
• a reactive layer (3) provided on the first contact element (2), and
• an insulating layer (4) provided on the reactive layer (3),
• wherein at least two second contact elements (5), which are electrically isolated from each other, are provided on the insulating layer (4), and
• wherein the reactive layer (3) is adapted to destroy the insulating layer (4) or to create an electrical conducting path through or around the insulating layer (4) after being activated in order to electrically connect the first contact element (2) and the second contact elements (5).

2. Cell connecting element (1) according to claim 1, **characterized by** at least two first contact elements (2), which are isolated from each other, wherein an additional insulating layer (6) is provided between the first contact elements (2) and the reactive layer (3).

3. Cell connecting element (1) according to claim 2, **characterized in that** a solder material (11) is provided between each first contact element (2) and the reactive layer (3) or additional insulating layer (6) and/or a solder material (11) is provided between each second contact element (5) and the isolating layer (4).

4. Cell connecting element (1) according to any of the previous claims, **characterized in that** the reactive layer (3) comprises an electroconductive trigger pin (15), which is selectively electrically connectable to one of the second contact elements (5) to create a current path from the first contact element (2) via the reactive layer (3) and the trigger pin (15) to the second contact element (5) in order to activate the reactive layer (3) via a short current pulse.

5. Cell connecting element (1) according to any of the previous claims, **characterized in that** the first contact element (2) and the second contact elements (5) have a plate-like shape with parallel top surface (7) and bottom surface (8), wherein the reactive layer (3) and the insulating layer (4) are provided between the top surface (7) of the first contact element (2) and the bottom surface (8) of the second contact element (5).

6. Cell connecting element (1) according to any of the previous claims, **characterized in that** the first contact element (2) has a convex polygonal cross section with several outer surfaces (9), wherein at least one outer surface (9) is provided with the reactive layer (3) and the insulating layer (4) such that each outer surface (9) is electrically connectable to at least two second contact elements (5).

7. Cell connecting element (1) according to any of the previous claims, **characterized in that** the first contact element (2) has a round cross section with a circumferential surface (10), wherein the circumferential surface (10) is provided with the reactive layer (3) and the insulating layer (4) such that the circumferential surface (10) is electrically connectable to at least two second contact elements (5).

8. Cell connecting element (1) according to claim 7, **characterized in that** the second contact elements (5) comprise a cutout (16) corresponding to the round cross section of the first contact element (2).

9. Cell connecting element (1) according to any of the previous claims, **characterized in that** the first contact element (2) and the second contact elements (5) are busbars.

10. Battery (12) comprising at least two battery cells (13) and one cell connecting element (1) according to any of the previous claims, wherein each battery cell (13) is electrically connected to the at least one cell connecting element (1), and wherein the number of battery cells (13) is higher than the number of cell connecting elements (1).
